# EUROPÄISCHE PATENTANMELDUNG

(11) **EP 3 061 852 A2**
(43) Veröffentlichungstag der Anmeldung: **31.08.2016**
(21) Anmeldenummer: 15193463.5
(22) Anmeldetag: 06.11.2015
(51) Int. Cl.: C25D 5/14, C25D 7/00, C25D 17/12, F01L 3/04, F01L 3/20, C25D 5/08

(54) **GASWECHSELVENTIL**

(30) Priorität: 12.12.2014 DE 102014225741
(71) Anmelder: Mahle International GmbH, 70376 Stuttgart (DE)
(72) Erfinder: DOGAR, Andreas, 71726 Benningen (DE); KÖRNER, Stephan, 74354 Besigheim (DE); ROSE, Reinhard, 70736 Fellbach (DE)
(74) Vertreter: BRP Renaud & Partner mbB Rechtsanwälte Patentanwälte Steuerberater

(57) **Zusammenfassung**

Die Erfindung betrifft ein Gaswechselventil (1) einer Brennkraftmaschine, mit einem Ventilteller (2) und einem Ventilschaft (3). Erfindungswesentlich ist dabei, dass zumindest am Ventilschaft (3) zumindest bereichsweise eine galvanisch aufgebrachte Nickel-Phosphor-Schicht (4) aufweist, deren Phosphoranteil größer als 10 Vol.-% ist, insbesondere zwischen 11 und 13 Vol.-% liegt.

Hierdurch kann die Verschleiß- und Korrosionsbeständigkeit verbessert werden.

## Beschreibung

Die vorliegende Erfindung betrifft ein Gaswechselventil einer Brennkraftmaschine mit einem Ventilteller und einem Ventilschaft, gemäß dem Oberbegriff des Anspruchs 1. Die Erfindung betrifft außerdem ein Verfahren sowie eine Vorrichtung zum Beschichten eines solchen Gaswechselventils.

Aus der DE 103 58 729 A1 ist ein gattungsgemäßes Gaswechselventil einer Brennkraftmaschine mit einem Ventilteller und einem Ventilschaft bekannt. Hierbei ist eine einem Brennraum der Brennkraftmaschine abgewandte Seite des Ventiltellers mit einer katalytischen Beschichtung und eine Oberfläche des an den Ventilteller angrenzenden Ventilschafts mit einer antiadhäsiven Beschichtung versehen. Hierdurch soll insbesondere eine übermäßige Verkokung des Gaswechselventils im Betrieb verhindert werden.

Generell sind Gaswechselventile in Brennkraftmaschinen hohen thermischen und/oder mechanischen Belastungen ausgesetzt. Neben den thermischen Belastungen spielen auch chemische Belastungen, beispielsweise durch Öle, Schmiermittel oder andere Stoffe, eine entscheidende Rolle, da sich diese oftmals negativ auf die Korrosions- und damit die Verschleißbeständigkeit auswirken können.

Die vorliegende Erfindung beschäftigt sich daher mit dem Problem, für ein Gaswechselventil der gattungsgemäßen Art eine verbesserte oder zumindest eine alternative Ausführungsform anzugeben, welche sich insbesondere durch eine erhöhte Verschleißbeständigkeit und einen erhöhten Korrosionswiderstand auszeichnet.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein an sich bekanntes Gaswechselventil einer Brennkraftmaschine mit einem Ventilteller und einem Ventilschaft, zumindest am Ventilschaft zumindest bereichsweise mit einer galvanisch aufgebrachten Nickel-Phosphor-Schicht zu versehen, deren Phosphoranteil größer als 10 Vol.-% ist, insbesondere zwischen 11 und 13 Vol.-% liegt. Durch den sehr hohen Phosphorgehalt von > 10 Vol.-% kann ein bislang nicht erreichbarer Korrosionsschutz erzielt werden. Eine derartig ausgebildete Nickel-Phosphor-Schicht hat sich überraschenderweise auch besonders gut gegenüber interkristalliner Korrosion, Heißgas und Kondensat-Korrosion erwiesen. Um einen so hohen Phosphoranteil zu ermöglichen, muss beim galvanischen Beschichten zum einen die galvanische Flüssigkeit sehr gut durchmischt werden, damit genügend Phosphor vorhanden ist und nicht beim Beschichten entstehender und an der Ventilkontur, insbesondere im Bereich des Ventilschaftes sich ablagernder Wasserstoff die Abscheidung behindert. Zum anderen muss mit einer vergleichsweise geringen Stromdichte im Bereich von 3,5 - 4,5 A/dm² beschichtet werden. In diesem Stromdichte Bereich wird der maximale Phosphorgehalt in der Ni-Schicht erzielt. Dadurch sind aber längere Beschichtungszeiten erforderlich. Durch die Verwendung beispielsweise einer Formanode kann dabei eine äußerst homogene und gleichmäßige Schichtdickenverteilung erreicht werden.

Zweckmäßig weist die Nickel-Phosphor-Schicht eine Schichtdicke von 8 µm ≤ d_{NP} ≤ 15 µm auf. Eine derartige Schichtdicke gewährleistet dabei einerseits eine hohe Verschleißbeständigkeit und andererseits einen deutlich erhöhten Korrosionsschutz für das Gaswechselventil, welches insbesondere bei einem Einsatz als Einlass- oder Auslassventil nicht nur hohen thermischen und mechanischen, sondern auch hohen chemischen Belastungen ausgesetzt ist.

Bei einer vorteilhaften Weiterbildung der erfindungsgemäßen Lösung ist zwischen dem Gaswechselventil und der Nickel-Phosphor-Schicht eine Nickel-Strike-Schicht als Haftschicht angeordnet, um insbesondere eine verbesserte Haftung und damit einen verbesserten Verbund der Nickel-Phosphor-Schicht auf einem hochlegierten Ventilstahl erreichen zu können. Eine solche Nickel-Strike-Schicht weist dabei üblicherweise lediglich eine Dicke von 1 bis 2 µm auf, ermöglicht jedoch eine äußerst tragfähige Verbindung der Nickel-Phosphor-Schicht mit dem Gaswechselventil.

Bei einer weiteren vorteilhaften Ausführungsform der erfindungsgemäßen Lösung ist die Nickel-Phosphor-Schicht zumindest teilweise mit einer Chromschicht überdeckt. Die Chromschicht wird dabei lediglich rein optional vorgesehen und als Dünnschicht aufgetragen und ist üblicherweise dicht geschlossen und rissfrei. Hierdurch kann die Korrosionsbeständigkeit nochmals gesteigert werden. Eine derartige zusätzliche und lediglich rein optionale Chromschicht wird dabei ausschließlich dann vorgesehen, sofern befürchtet werden muss, dass die bereits von der Nickel-Phosphor-Schicht verbesserte Verschleißbeständigkeit, insbesondere bei extremen Mangelschmierzuständen, nicht ausreicht. Hierbei wird insbesondere ein Ventilführungsbereich des Ventilschaftes mit einer solchen Chromschicht zusätzlich beschichtet, da die dort auftretenden mechanischen Belastungen, zusätzlich zu den thermischen und chemischen Belastungen besonders hoch sind.

Bei einer vorteilhaften Weiterbildung der erfindungsgemäßen Lösung weist die Chromschicht zusammen mit der Nickel-Phosphor-Schicht eine Dicke von < 25 µm auf. Hierdurch wird eine Beschichtung erzielt, die in Bezug auf Funktion und Kosten die beste Lösung erzielt.

Die vorliegende Erfindung beruht weiter auf dem allgemeinen Gedanken, ein Verfahren zum Beschichten eines Gaswechselventils anzugeben, bei welchem zunächst zumindest in einem Ventilführungsbereich des Ventilschaftes des zu beschichtenden Gaswechselventils eine Nickel-Strike-Schicht galvanisch aufgetragen wird. Diese Nickel-Strike-Schicht dient dabei als Haftvermittler für eine später in diesem Bereich aufzutragende Nickel-Phosphor-Schicht mit einem Phosphoranteil von > 10 Vol.-%, insbesondere mit einem Phosphoranteil zwischen 11 und 13 Vol.-%. Die Nickel-Strike-Schicht ist dabei als Dünnschicht ausgebildet und in der Regel nur 1 bis 2 µm dick. Sie bewirkt jedoch eine optimale Verbindung der den Korrosionswiderstand und den Verschleißwiderstand erhöhenden Nickel-Phosphor-Schicht. Insbesondere der hohe Phosphorgehalt der Nickel-Phosphor-Schicht ist dabei verantwortlich für den guten Korrosionsschutz und wirkt insbesondere gegenüber interkristalliner Korrosion, Heißgas und Kondensat-Korrosion.

Um die Verschleißbeständigkeit und auch den Korrosionsschutz weiter erhöhen zu können, kann die Nickel-Phosphor-Schicht zusätzlich zumindest teilweise mit einer Chromschicht überdeckt werden. Diese ist üblicherweise rissfrei und erhöht dadurch den Korrosionswiderstand, ebenso wie den Verschleißwiderstand bei Mangelschmierzuständen.

Die vorliegende Erfindung beruht weiter auf dem allgemeinen Gedanken, eine Vorrichtung zum Beschichten eines Gaswechselventils anzugeben, welche ein Galvanikbad mit einer galvanischen Flüssigkeit sowie einer darin angeordneten Anode und einer Kathode aufweist. Die Anode besitzt dabei eine Aufnahme, in welcher das zu beschichtende Gaswechselventil mit einem Ventilschaftende aufgenommen und insbesondere zentriert werden kann, wobei die Anode zusätzlich eine Negativkontur zu einer Ventilkehle des Gaswechselventils aufweist und dadurch in der Lage ist, das zu beschichtende Gaswechselventil lagefixiert in der Anode aufzunehmen. Zusätzlich ist in dem Galvanikbad eine Kathode vorgesehen, die flächig am Ventiltellerboden anlegbar, und über die Strom in das Gaswechselventil zum Beschichten desselben einleitbar ist. Durch die Kontaktierung des Ventiltellerbodens mit der Kathode ist somit das Gaswechselventil selbst die eigentliche Kathode und die Halterung, die das Gaswechselventil aufnimmt und gitterförmig den zu beschichtenden Bereich des Gaswechselventils, insbesondere den Ventilschaft, umgibt, die Anode. Beides sind Elektroden, wobei die Anode in der Regel eine sogenannte unlösliche Mixed metal oxide (MMO-Anode) ist, die den Vorteil bietet, sich beim Beschichtungsprozess nicht aufzulösen und somit immer einen gleichbleibenden Abstand zum Ventil garantiert und hierdurch eine gleichmäßige Beschichtung ermöglicht. Zur guten Durchmischung des Galvanikbades kann selbstverständlich auch noch eine Mischeinrichtung, beispielsweise ein Propeller oder ähnliches vorgesehen sein, die dafür sorgt, dass genügend Phosphor vorhanden ist und der beim Beschichten entstehende und an der Ventilkontur sich ablagernde Wasserstoff die Abscheidung nicht behindert.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf ein erfindungsgemäßes Gaswechselventil mit einer geschnittenen Detaildarstellung,
- Fig. 2: eine erfindungsgemäße Vorrichtung zum Beschichten des Gaswechselventils.

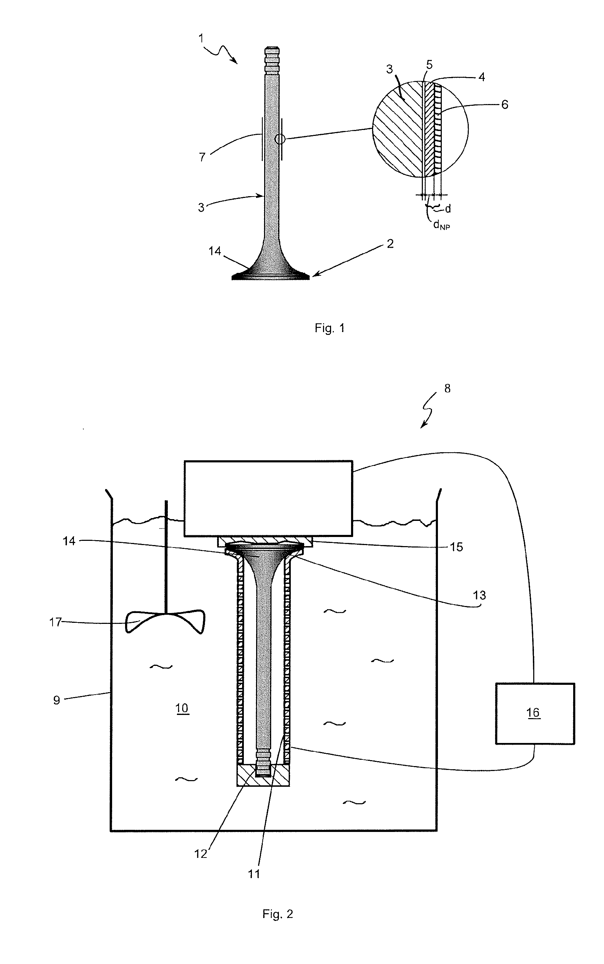

Entsprechend der Figur 1, weist ein erfindungsgemäßes Gaswechselventil 1 einer im Übrigen nicht gezeigten Brennkraftmaschine einen Ventilteller 2 sowie einen Ventilschaft 3 auf. Das Gaswechselventil 1 ist dabei üblicherweise als Einlass- oder Auslassventil ausgebildet. Um einen erhöhten Korrosions- und Verschleißwiderstand gegen die beim Betrieb der Brennkraftmaschine auftretenden hohen thermischen, mechanischen und chemischen Belastungen schaffen zu können, ist das erfindungsgemäße Gaswechselventil 1 zumindest am Ventilschaft 3 zumindest bereichsweise mit einer galvanisch aufgebrachten Nickel-Phosphor-Schicht 4 (vgl. auch die Detaildarstellung in Figur 1) beschichtet, deren Phosphoranteil > 10 Vol.-% ist. Idealerweise beträgt der Phosphorgehalt der Nickel-Phosphor-Schicht 4 sogar zwischen 11 und 13 Vol.-%. Der hohe Phosphorgehalt ist dabei verantwortlich für einen guten Korrosionsschutz wobei die Nickel-Phosphor-Schicht 4 insbesondere gegenüber interkristalliner Korrosion, Heißgas und Kondensat-Korrosion schützen soll.

Üblicherweise besitzt die Nickel-Phosphor-Schicht 4 eine Schichtdicke von 8 µm ≤ d_{NP} ≤ 15 µm. Um dabei einen möglichst optimalen Verbund mit dem hochlegierten Stahl des Ventilschaftes 3 schaffen zu können, kann zwischen dem Gaswechselventil 1 und der Nickel-Phosphor-Schicht 4 eine Nickel-Strike-Schicht 5 vorgesehen sein. Diese Nickel-Strike-Schicht 5 ist dabei doch lediglich 1 bis 2 µm dick.

Um den Verschleißwiderstand und die Korrosionsbeständigkeit weiter steigern zu können, kann die Nickel-Phosphor-Schicht 4 zusätzlich zumindest bereichsweise mit einer Chromschicht 6 überzogen sein, die als Dünnschicht aufgetragen ist und üblicherweise dicht und rissfrei ausgeführt ist. Eine derartige Chromschicht 6 ist jedoch lediglich rein optional vorgesehen, sofern der bereits erhöhte Verschleiß- und Korrosionswiderstand der Nickel-Phosphor-Schicht 4 nicht ausreichend sein sollte. Insgesamt sollte die Chromschicht 6 zusammen mit der Nickel-Phosphor-Schicht 4 eine Dicke d < 25 µm aufweisen. Da besonders im Bereich 7 einer Ventilführung eine erhöhte mechanische Belastung auftritt, die auch einen erhöhten Verschleiß- und Korrosionswiderstand erfordert, ist es sinnvoll, die erfindungsgemäße Nickel-Phosphor-Schicht 4 und optional zusätzlich die Chromschicht 6 besonders in diesem Bereich 7 aufzubringen.

Das Gaswechselventil 1 selbst ist aus einem bekannten hochlegierten Stahl ausgebildet, beispielsweise X50CrMnNiNbN21-9 (1.4882) Stahl, einem NiCr20TiAl (Nimonic 80A 2.4952) Stahl oder einem Nireva 3015 Stahl.

Betrachtet man die Figur 2, so kann man hier eine Vorrichtung 8 zum Beschichten des Gaswechselventils 1 erkennen, wobei die Vorrichtung 8 ein Galvanikbad 9 mit einer Galvanikflüssigkeit 10 mit einer darin angeordneten Anode 11 aufweist. Die Anode 11 besitz eine Aufnahme 12, in welcher das zu beschichtende Gaswechselventil 1 mit einem Ventilschaftende aufgenommen ist, sowie eine Negativkontur 13, welche komplementär zu einer Ventilkehle 14 des Gaswechselventils 1 ausgebildet ist und dadurch flächig an dieser anliegt. Ebenfalls vorgesehen ist eine Kathode 15, die flächig am Ventiltellerboden des Ventiltellers 2 anliegt und über die Strom mittels einer Stromquelle 16 in das Gaswechselventil 1 einleitbar ist. In diesem Fall ist somit das Gaswechselventil 1 die eigentliche Kathode, über welche Strom zur Anode 11 fließt. Ebenfalls vorgesehen sein kann eine Mischeinrichtung 17, mittels welcher die Galvanikflüssigkeit 10 während des galvanischen Beschichtens gut durchmischt wird, so dass ein stets ausreichend hoher Phosphoranteil zum Herstellen der Nickel-Phosphor-Schicht 4 an die Oberfläche des Ventilschaftes 3 gelangen kann. Zusätzlich wird hierdurch auch eine unerwünschte Ablagerung von Wasserstoff verhindert, welche die Abscheidung von Phosphor behindern würde. Die Anode 11 ist dabei in der Regel eine Mixed metal oxide (MMO) Anode. Selbstverständlich ist dabei denkbar, dass nicht nur der Ventilschaft 3, sondern zusätzlich zumindest die Ventilkehle 14 mit der erfindungsgemäßen Nickel-Phosphor-Schicht 4 und optional zusätzlich mit der Chromschicht 6 zur verbesserten Verschleiß- und Korrosionsbeständigkeit überzogen sind.

Mit der erfindungsgemäßen Nickel-Phosphor-Schicht 4 mit deren vergleichsweise hohem Phosphoranteil von > 10 % und der optionalen Chromschicht 6 kann eine besonders hohe Verschleiß- und Korrosionsbeständigkeit erreicht werden, die mit bislang vergleichbaren Beschichtungen nicht erreicht werden konnte.

## Patentansprüche

1. Gaswechselventil (1) einer Brennkraftmaschine, mit einem Ventilteller (2) und einem Ventilschaft (3),
**dadurch gekennzeichnet,**
**dass** zumindest am Ventilschaft (3) zumindest bereichsweise eine galvanisch aufgebrachte Nickel-Phosphor-Schicht (4) aufweist, deren Phosphoranteil größer als 10 Vol.-% ist, insbesondere zwischen 11 und 13 Vol.-% liegt.

2. Gaswechselventil nach Anspruch 1,
**dadurch gekennzeichnet,**
**dass** die Nickel-Phosphor-Schicht (4) eine Schichtdicke von 8 µm ≤ d_{NP} ≤ 15 µm aufweist.

3. Gaswechselventil nach Anspruch 1 oder 2,
**dadurch gekennzeichnet,**
**dass** zwischen dem Gaswechselventil (1) und der Nickel-Phosphor-Schicht (4) eine Nickel-Strike-Schicht (5) als Haftschicht angeordnet ist.

4. Gaswechselventil nach einem der vorhergehenden Ansprüche,
**dadurch gekennzeichnet,**
**dass** die Nickel-Phosphor-Schicht (4) zumindest teilweise von einer Chromschicht (6) überdeckt ist.

5. Gaswechselventil nach Anspruch 4,
**dadurch gekennzeichnet,**
**dass** die Chromschicht (6) zusammen mit der Nickel-Phosphor-Schicht (4) eine Dicke d ≤ 25 µm aufweist.

6. Gaswechselventil nach einem der vorhergehenden Ansprüche,
**dadurch gekennzeichnet,**
**dass** die Nickel-Phosphor-Schicht (4) ausschließlich im Bereich einer Ventilführung (7) am Ventilschaft (3) aufgebracht ist.

7. Gaswechselventil nach einem der vorhergehenden Ansprüche,
**dadurch gekennzeichnet,**
**dass** das Gaswechselventil (1) aus einem X50CrMnNiNbN21-9 (1.4882) Stahl, einem NiCr20TiAl (Nimonic 80A 2.4952) Stahl oder einem nireva 3015 Stahl ausgebildet ist.

8. Verfahren zum Beschichten eines Gaswechselventil (1) nach einem der vorhergehenden Ansprüche, bei dem
- zumindest im Bereich einer Ventilführung (7) des Ventilschaftes (2) eine Nickel-Strike-Schicht (5) galvanisch aufgetragen wird,
- zumindest im Bereich der Ventilführung (7) eine Nickel-Phosphor-Schicht (4) mit einem Phosphoranteil von größer als 10 Vol.-% galvanisch aufgetragen wird.

9. Verfahren nach Anspruch 8,
**dadurch gekennzeichnet,**
**dass** die Nickel-Phosphor-Schicht (4) zumindest teilweise von einer Chromschicht (6) überdeckt wird.

10. Vorrichtung zum Beschichten eines Gaswechselventils (1), mit einem Galvanikbad (9) mit einer darin angeordneten Anode (11) mit einer Aufnahme (12), in welcher das zu beschichtende Gaswechselventil (1) mit einem Ventilschaftende aufgenommen ist, wobei die Anode (11) eine Negativkontur (13) zu einer Ventilkehle (14) des Gaswechselventils (1) aufweist, und mit einer Kathode (15), die flächig am Ventiltellerboden anlegbar und über die Strom in das Gaswechselventil (1) einleitbar ist.
